# EUROPEAN PATENT APPLICATION

(11) **EP 2 270 411 A1**
(43) Date of publication of application: **05.01.2011**
(21) Application number: 09738649.4
(22) Date of filing: 30.04.2009
(51) Int. Cl.: F28D 1/06, F25B 30/06, F28D 7/06

(54) **HEAT EXCHANGER AND AIR CONDITIONING SYSTEM**

(30) Priority: 30.04.2008 JP 2008118186; 19.12.2008 JP 2008323743
(71) Applicant: Daikin Industries, Ltd., Osaka-shi, Osaka 530-8323 (JP)
(72) Inventor: ASAI, Hideaki, Sakai-shi Osaka 591-8511 (JP); KAWABATA, Katsuhiro, Sakai-shi Osaka 591-8511 (JP); TANIMOTO, Keisuke, Sakai-shi Osaka 591-8511 (JP); KANG, Yoonmyung, Sakai-shi Osaka 591-8511 (JP)
(74) Representative: HOFFMANN EITLE
(86) International application number: PCT/JP2009/001976
(87) International publication number: WO 2009/133712

(57) **Abstract**

A heat exchanger for exchanging heat under the ground or water includes an outer pipe (51) to be installed under the ground or water; and a cooling heat-transfer pipe (52) which is inserted into the outer pipe (51), and which dissipates heat from refrigerant injected thereto. A heat medium is sealed in the outer pipe (51). The outer pipe (51) and the cooling heat-transfer pipe (52) are arranged so that the liquid heat medium is held between an inner wall surface of the outer pipe (51) and an outer wall surface of the cooling heat-transfer pipe (52).

## Description

### TECHNICAL FIELD

The present invention relates to a heat exchanger installed under the ground or water, and an air conditioning system using the heat exchanger.

### BACKGROUND ART

An example of a so-called "heat-pump heating system" which performs heating by a refrigeration cycle is a system in which ground heat or heat contained in water is used as a heat source to evaporate refrigerant. For example, in a heat-pump heating system using ground heat, an underground heat exchanger for recovering ground heat from the ground is used (see, e.g., Patent Document 1). In the heat exchanger of Patent Document 1, a pipe (referred to as a "buried pipe" in the specification) filled with a heat medium (secondary medium) is buried under the ground, and the heat medium inside the buried pipe is evaporated by ground heat. A pipe is branched from the buried pipe, and then the heat exchanger is attached to the branched pipe. Heat recovered in the heat exchanger is used as a heat source of the heat-pump heating system.

### CITATION LIST

### PATENT DOCUMENT

PATENT DOCTJMENT 1: International Publication No. WO2004/111559

### SUMMARY OF THE INVENTION

### TECHNICAL PROBLEM

However, e.g., a conventional heat exchanger used under the ground is used only for heating, and cannot be used for both cooling and heating. Further, in, e.g., an underground heat exchanger extracting heat from soil, when using the compact underground heat exchanger, it is difficult to obtain a sufficient amount of heat with heat exchange capability of the conventional heat exchanger due to large heat transfer resistance of the soil. Thus, when an attempt is made to obtain a sufficient amount of heat in, e.g., a so-called "vertical underground heat exchanger" buried in the vertical direction, it is necessary to bury the underground heat exchanger to great depth. Specifically, there is an example in which a burial depth of approximately 100 m is required for an underground heat exchanger of a household heating system. Such a requirement of the burial depth of the underground heat exchanger causes a problem on its installation cost. In a pipe, an area where working fluid is condensed is smaller than an area where the working fluid is evaporated, resulting in poor heat balance between the vaporization and the condensation. Although the condensed working fluid flows from an upper section of the pipe, a long wall surface of the pipe is not uniformly moistened. That is, the conventional underground heat exchanger does not effectively perform the heat exchange using ground heat.

In addition, in a broadly-used system in which water circulates inside the underground heat exchanger to use heat from such circulating water, heat is indirectly exchanged through the water, thereby causing a loss in temperature gradient for such heat exchange. A tube line for running water into the pipe buried to the above-described depth, and a pump for transferring the heat medium flowing in the tube are required, and therefore there is a problem that power consumption of the pump degrades efficiency of the entire heating system. The foregoing problems may be similarly caused when using the conventional underground heat exchanger as a condenser for cooling.

The present invention has been made in view of the foregoing problems, and it is an object of the present invention to improve heat exchange capability in a heat exchanger arranged under the ground or water.

### SOLUTION TO THE PROBLEMS

In order to solve the foregoing problems, a first aspect of the invention is intended for a heat exchanger including an outer pipe (51) to be installed under the ground or water; a cooling heat-transfer pipe (52) which is inserted into the outer pipe (51), and which dissipates heat from refrigerant injected thereto; and a heat medium sealed in the outer pipe (51). In the heat exchanger, heat is dissipated by using a change in phase of the heat medium; and the outer pipe (51) and the cooling heat-transfer pipe (52) are arranged so that the liquid heat medium is held between an inner wall surface of the outer pipe (51) and an outer wall surface of the cooling heat-transfer pipe (52).

Such a configuration allows the heat medium to be condensed by exchanging heat through the inner wall surface of the outer pipe (51) under the ground or water. The liquid heat medium is held through a heat medium holding section (60) by surface tension, and therefore the outer wall surface of the cooling heat-transfer pipe (52) is uniformly moistened by the liquid heat medium. Then, the cooling heat-transfer pipe (52) exchanges heat with the condensed heat medium. Thus, the heat medium is evaporated, and refrigerant inside the cooling heat-transfer pipe (52) is condensed. The cooling heat-transfer pipe (52) exchanges heat under the ground or water by using the change in phase of the heat medium. That is, the heat exchanger serves as a condenser.

A second aspect of the invention is intended for the heat exchanger of the first aspect of the invention, in which the cooling heat-transfer pipe (52) contacts the inner wall surface of the outer pipe (51) for heat exchange.

This allows the direct heat exchange between the cooling heat-transfer pipe (52) and the inner wall surface of the outer pipe (51).

A third aspect of the invention is intended for the heat exchanger of the first aspect of the invention, in which the cooling heat-transfer pipe (52) extends from one end of the outer pipe (51) to the other end.

This allows the cooling heat-transfer pipe (52) to exchange heat with the heat medium by using a broader area of the cooling heat-transfer pipe (52).

A fourth aspect of the invention is intended for the heat exchanger of the first aspect of the invention, in which, in the outer pipe (51), a wick (90) is provided along the inner wall surface of the outer pipe (51).

This allows the liquid heat medium inside the outer pipe (51) to penetrate the wick (90), and allows the wick (90) to held such heat medium. In addition, the wick (90) allows the held liquid refrigerant to contact the inner wall surface of the outer pipe (51).

A fifth aspect of the invention is intended for the heat exchange of the first aspect of the invention, in which grooves (100) for holding the heat medium by surface tension are formed in the inner wall surface of the outer pipe (51).

This allows the grooves (100) to held the liquid heat medium inside the outer pipe (51), and allows the held liquid refrigerant to contact the inner wall surface of the outer pipe (51),

A sixth aspect of the invention is intended for the heat exchanger of the first aspect of the invention, which further includes a heating heat-transfer pipe (80) which is inserted into the outer pipe (51), and which evaporates refrigerant injected thereto.

Such a configuration allows the heat medium to be evaporated by exchanging heat through the inner wall surface of the outer pipe (51) under the ground or water during a heating operation. The heating heat-transfer pipe (80) exchanges heat with the evaporated heat medium. Thus, the heat medium is condensed, and refrigerant inside the heating heat-transfer pipe (80) is evaporated. That is, the heating heat-transfer pipe (80) exchanges heat under the ground or water by using the change in phase of the heat medium. This allows the heating heat-transfer pipe (80) to serve as an evaporator for evaporating refrigerant, and therefore the heating heat-transfer pipe (80) absorbs heat from the ground or water.

A seventh aspect of the invention is intended for the heat exchanger of the first to sixth aspects of the invention, in which the cooling heat-transfer pipe (52) is formed in coiled shape.

This increases an area where the cooling heat-transfer pipe (52) contacts the heat medium.

An eighth aspect of the invention is intended for an air conditioning system including the heat exchanger of the first to seventh aspects of the invention to perform a refrigeration cycle.

This allows a cooling operation in which heat is dissipated to the ground or water, or a heating operation in which heat contained in the ground or water is used as a heat source, in the air conditioning system. In the cooling operation, the heat medium holding section (60) holds the liquid heat medium by the surface tension, and therefore the outer wall surface of the cooling heat-transfer pipe (52) is uniformly moistened by the liquid heat medium. Consequently, vaporization is accelerated.

### ADVANTAGES OF THE INVENTION

According to the first aspect of the invention, the heat exchanger installed under the ground or water may be used for cooling. The outer wall surface of the cooling heat-transfer pipe (52) is uniformly moistened by the liquid heat medium, and therefore heat is effectively exchanged between the outer wall surface of the cooling heat-transfer pipe (52) and the liquid heat medium. Consequently, refrigerant inside the cooling heat-transfer pipe (52) can be effectively condensed. That is, according to the present invention, heat exchange capability of the heat exchanger is improved, thereby allowing reduction in size of the heat exchanger.

According to the second aspect of the invention, heat is directly exchanged between the cooling heat-transfer pipe (52) and the inner wall surface of the outer pipe (51), and therefore refrigerant inside the cooling heat-transfer pipe (52) can be more effectively condensed. Consequently, the heat exchange capability of the heat exchanger is improved.

According to the third aspect of the invention, the cooling heat-transfer pipe (52) exchanges heat with the heat medium by using the broader area of the cooling heat-transfer pipe (52), thereby more effectively condensing refrigerant inside the cooling heat-transfer pipe (52). Consequently, the heat exchange capability of the heat exchanger is improved.

According to the fourth aspect of the invention, the liquid heat medium inside the outer pipe (51) penetrates the wick (90), and is held by the wick (90). In addition, the wick (90) allows the held liquid refrigerant to contact the inner wall surface. Thus, uniform moistening of the inner wall surface of the outer pipe (51) can be ensured, thereby further improving the heat exchange capability.

According to the fifth aspect of the invention, the grooves (100) hold the liquid heat medium inside the outer pipe (51), and allow the held liquid refrigerant to contact the inner wall surface of the outer pipe (51). Thus, the uniform moistening of the inner wall surface of the outer pipe (51) can be ensured, thereby further improving the heat exchange capability.

According to the sixth aspect of the invention, the heating heat-transfer pipe (80) serves as the evaporator for evaporating refrigerant, and absorbs heat from the ground or water. Thus, the heat exchanger may be used as the condenser for cooling and the evaporator for heating.

According to the seventh aspect of the invention, the area where the cooling heat-transfer pipe (52) contacts the heat medium is increased. Thus, in the heat exchanger, heat exchange efficiency can be improved.

According to the eighth aspect of the invention, in the air conditioning system, the heat exchange capability of the heat exchanger is particularly improved in the cooling operation. Such improvement of the heat exchanger capability allows the reduction in size of the heat exchanger, and may lead to reduction in cost of the air conditioning system.

### BRIEF DESCRIPTION OF THE DRAWINGS

[FIG. 1] FIG. 1 is a system diagram of an air conditioning system including an underground heat exchanger of a first embodiment.
[FIG. 2] FIG. 2 is a longitudinal sectional view illustrating a configuration of the underground heat exchanger of the first embodiment.
[FIG. 3] FIGS. 3(A) and 3(B) are views illustrating movement of refrigerant in a cooling operation. FIG. 3(A) is a cross-sectional view of the underground heat exchanger, and FIG. 3(B) is an enlarged view of a heat medium holding section.
[FIG. 4] FIG. 4 is a system diagram of an air conditioning system including an underground heat exchanger of a second embodiment.
[FIG. 5] FIG. 5 is a longitudinal sectional view illustrating a configuration of the underground heat exchanger of the second embodiment.
[FIG. 6] FIG. 6 is a view schematically illustrating a state in which an underground heat exchanger (50) is installed so as to be inclined.
[FIG. 7] FIG. 7 is a view schematically illustrating a state in which an underground heat exchanger (50) is horizontally installed.
[FIG. 8] FIG. 8 is a view schematically illustrating a state in which a heat exchanger (50) is installed under water.
[FIG. 9] FIGS. 9(A) and 9(B) are views illustrating an example of a configuration of an outer pipe. FIG. 9(A) is a cross-sectional view of the outer pipe, and
FIG. 9(B) is a perspective view with a part of the outer pipe being removed.
[FIG. 10] FIG. 10 is a cross-sectional view further illustrating other example of the configuration of the outer pipe.
[FIG. 11] FIG. 11 is an example of a configuration of grooves (100), and illustrates the example in which the grooves (100) are formed in a circumferential direction.

### DESCRIPTION OF EMBODIMENTS

Embodiments of the present invention will be described hereinafter with reference to the drawings. The embodiments below have been set forth merely for purposes of preferred examples in nature, and are not intended to limit the scope, applications, and use of the invention. In addition, in the description of embodiments and variations below, the same reference numeral is used throughout to refer to a component having the same function as that of a component which is first described, and the description thereof will not be repeated.

### <<First Embodiment of the Invention>>

In a first embodiment, an underground heat exchanger installed under the ground will be described as an example of a heat exchanger of the present invention. The underground heat exchanger of the embodiments of the present invention is used for, e.g., a heat-pump air conditioning system which can perform a cooling operation. The underground heat exchanger serves as a condenser in the cooling operation, and dissipates heat to soil.

Note that the "soil" includes layers containing only dirt, as well as water-bearing layers containing both of dirt and water. That is, depending on a site and a depth of installation, the underground heat exchanger may exchange heat with dirt, water contained in the ground, or both of them.

### <Overall Configuration of Air Conditioning System>

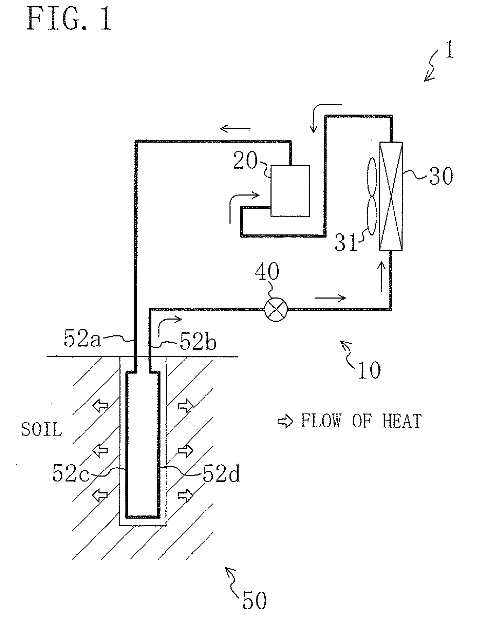

FIG. 1 is a system diagram of an air conditioning system (1) including an underground heat exchanger (50) of an embodiment of the present invention. As illustrated in FIG. 1, the air conditioning system (1) of the present embodiment includes a refrigerant circuit (10). A compressor (20), an indoor heat exchanger (30), an expansion valve (40), and the underground heat exchanger (50) are connected to the refrigerant circuit (10). The refrigerant circuit (10) is filled with refrigerant (working fluid).

The compressor (20) sucks refrigerant through a suction port to compress such refrigerant, and then discharges the compressed refrigerant through a discharge port. Specifically, various compressors such as a scroll compressor may be employed as the compressor (20). In the refrigerant circuit (10), the suction port of the compressor (20) is connected to the indoor heat exchanger (30), and the discharge port of the compressor (20) is connected to the underground heat exchanger (50) (specifically, an entry section (52a) which will be described later).

The indoor heat exchanger (30) is an air heat exchanger for exchanging heat between refrigerant and indoor air. In the air conditioning system (1), the indoor heat exchanger (30) is installed inside a so-called "indoor unit" arranged in a room to be air conditioned. In the refrigerant circuit (10), one end of the indoor heat exchanger (30) is connected to the expansion valve (40), and the other end is connected to the suction port of the compressor (20) as described above. In the cooling operation, heat contained in indoor air is absorbed by low-pressure refrigerant flowing from the expansion valve (40) to the indoor heat exchanger (30). For example, a cross-fin type fin-and-tube heat exchanger may be employed as the indoor heat exchanger (30). An indoor fan (31) is installed near the indoor heat exchanger (30). The indoor fan (31) sends air-conditioned air to the room.

An inflow hole of the expansion valve (40) is connected to the underground heat exchanger (50) (specifically, an exit section (52b) which will be described later). The expansion valve (40) expands refrigerant flowing from the underground heat exchanger (50) to reduce the pressure of such refrigerant to a predetermined pressure, and then discharges the refrigerant to the indoor heat exchanger (30).

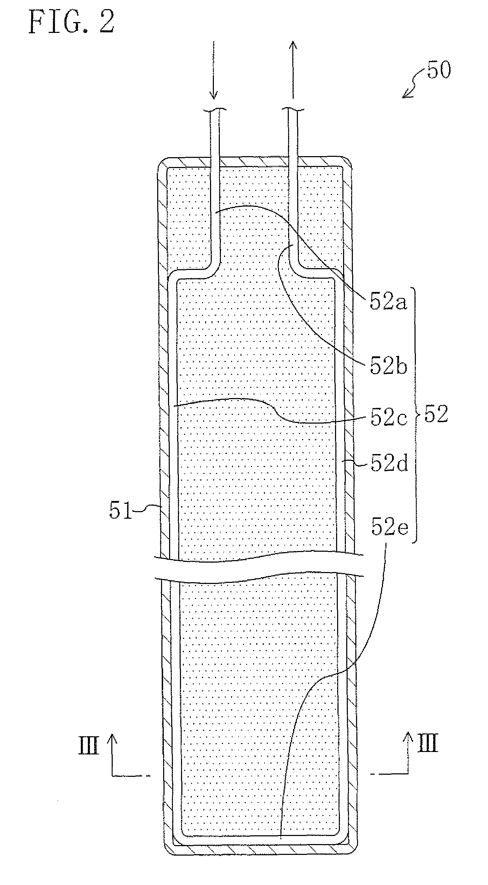

The underground heat exchanger (50) is buried under the ground, and exchanges heat with soil. Specifically, the underground heat exchanger (50) serves as a condenser in the cooling operation, and dissipates heat to soil. As illustrated in FIG. 2, the underground heat exchanger (50) of the present embodiment includes an outer pipe (51) and a cooling heat-transfer pipe (52).

The outer pipe (51) is formed in tubular shape with closed ends, and is vertically buried under the ground in this example. A geological layer includes, e.g., a layer mainly containing dirt; a layer containing dirt and water; a layer mainly containing water; and a rock layer in which rocks are successively distributed. The underground heat exchanger (50) may be installed in any of the geological layers.

A predetermined amount of carbon dioxide (CO₂) is sealed in the outer pipe (51) as a heat medium. As described later, the heat medium is condensed by dissipating heat to soil through an inner wall surface of the outer pipe (51), and is evaporated by absorbing heat at an outer wall surface of the cooling heat-transfer pipe (52).

The cooling heat-transfer pipe (52) is formed in tubular shape, and is inserted into the outer pipe (51). In the refrigerant circuit (10), refrigerant is injected into the cooling heat-transfer pipe (52), and heat is dissipated from such refrigerant. Specifically, in the refrigerant circuit (10), one end of the cooling heat-transfer pipe (52) is connected to the discharge port of the compressor (20), and the other end is connected to the expansion valve (40).

As illustrated in FIG. 2, the cooling heat-transfer pipe (52) of the present embodiment specifically includes the entry section (52a), the exit section (52b), an entry-side body section (52c), an exit-side body section (52d), and a connection section (52e).

The entry section (52a) is inserted into the outer pipe (51) from an upper side of the outer pipe (51) (a ground surface side in a state in which the outer pipe (51) is buried), and one end of the entry section (52a) is connected to the discharge port of the compressor (20) through a pipe. The other end of the entry section (52a) is connected to one end of the entry-side body section (52c) in an upper section inside the outer pipe (51). In addition, the exit section (52b) is inserted into the outer pipe (51) from the upper side of the outer pipe (51), and one end of the exit section (52b) outside the outer pipe (51) is connected to the expansion valve (40) through a pipe. The other end of the exit section (52b) is connected to one end of the exit-side body section (52d) in the upper section inside the outer pipe (51).

Both of the entry-side body section (52c) and the exit-side body section (52d) extend from above the outer pipe (51) to a bottom section of the outer pipe (51) along the inner wall surface of the outer pipe (51). The connection section (52e) crosses the bottom section in a radial direction, and one end of the entry-side body section (52c) and one end of the exit-side body section (52d) are connected together in the bottom section.

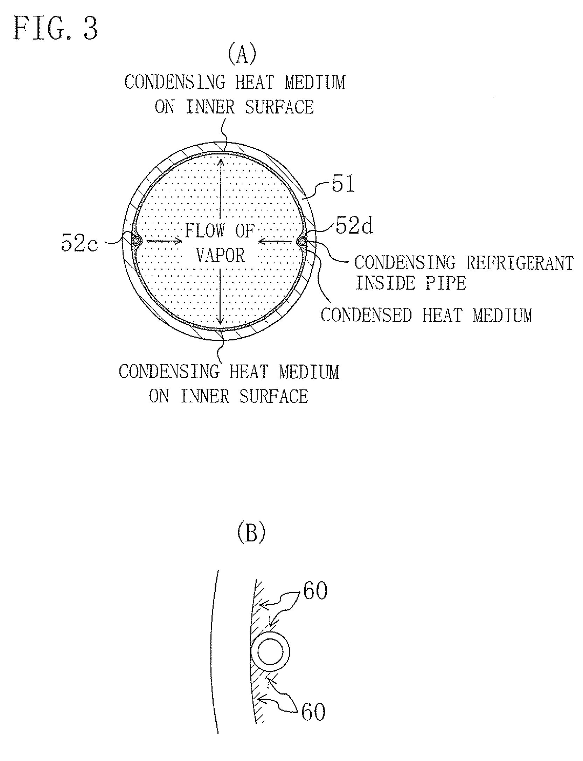

The outer wall surface of the entry-side body section (52c) and the inner wall surface of the outer pipe (51) define a heat medium holding section (60) for holding a liquid heat medium by surface tension. Similarly, the outer wall surface of the exit-side body section (52d) and the inner wall surface of the outer pipe (51) also define a heat medium holding section (60). Specifically, the outer wall surface of the body section (52c, 52d) is arranged adjacent to the inner wall surface of the outer pipe (51). As illustrated in FIGS. 3(A) and 3(B), the liquid heat medium adhered on the inner wall surface of the outer pipe (51) is held between such walls (e.g., between the outer wall surface of the entry-side body section (52c) and the inner wall surface of the outer pipe (51)) by the surface tension. As long as the liquid heat medium can be held by the surface tension as described above, the outer wall surface of the body section (52c, 52d) does not necessarily contact the inner wall surface of the outer pipe (51). However, in the present embodiment, the outer wall surfaces of the body sections (52c, 52d) are arranged so as to contact the inner wall surface of the outer pipe (51). In this manner, the outer wall surfaces of the body sections (52c, 52d) are arranged so as to contact the inner wall surface of the outer pipe (51), thereby directly exchanging heat between the body section (52c, 52d) and the outer pipe (51). That is, such a direct heat exchange improves heat exchange capability in the underground heat exchanger (50). In the underground heat exchanger (50), heat is exchanged by the two body sections which are the entry-side body section (52c) and the exit-side body section (52d). However, the number of body sections (52c, 52d) has been set forth merely for purposes of examples in nature, and it is not limited to the above.

### Operation

Next, a process in the air conditioning system (1) during the cooling operation will be described.

When staring the cooling operation, if the compressor (20) comes into operation, then compressed refrigerant (gaseous refrigerant) is discharged through the discharge port of the compressor (20). The refrigerant discharged from the compressor (20) is sent to the entry section (52a) of the underground heat exchanger (50), and is further injected into the body sections (52c, 52d).

In such a state, the inner wall surface of the outer pipe (51) initially has a temperature equal to the ground temperature. After a predetermined period of time is elapsed from such a point, the temperature increases in the body sections (52c, 52d) due to large heat transfer resistance of soil. An amount of heat to be transferred between the outer pipe (51) and soil is limited by the heat transfer resistance of soil. Thus, a flow rate of refrigerant is generally controlled so that heat is transferred within a range in which a temperature gradient between the inner wall surface of the outer pipe (51) and the body section (52c, 52d) is maintained, and in which a temperature distribution under the ground is maintained constant. Meanwhile, a part of the heat medium is condensed to liquid by dissipating heat to soil through the inner wall surface of the outer pipe (51). This functions to avoid concentration of the heat transfer in sections where the inner wall surface of the outer pipe (51) contacts the body sections (52c, 52d), and to dissipate and disperse heat across the entire inner wall surface of the outer pipe (51). As illustrated in FIG. 3, the liquid heat medium is attracted to the heat medium holding section (60) defined between the inner wall surface of the outer pipe (51) and the outer wall surface of the body section (52c, 52d), by the surface tension caused in the heat medium holding section (60). The heat medium condensed in the outer pipe (51) is attracted to the outer wall surface of the body section (52c, 52d) through the heat medium holding section (60), and therefore the outer wall surface of the body section (52c, 52d) is uniformly moistened by the liquid heat medium. The heat medium on the outer wall surface of the body section (52c, 52d) is evaporated by absorbing heat from the body section (52c, 52d). The heat medium evaporated in this manner is recondensed by dissipating heat to soil through the inner wall surface of the outer pipe (51).

Meanwhile, the body section (52c, 52d) dissipates heat to the heat medium contacting the body section (52c, 52d), and then further dissipates such heat to soil through the inner wall surface of the outer pipe (51), which contacts the body section (52c, 52d). The body section (52c, 52d) dissipates heat in this manner, thereby condensing refrigerant injected into the body section (52c, 52d). The condensed refrigerant is injected into the expansion valve (40) through the exit section (52b). Subsequently, the pressure of the refrigerant is reduced by the expansion valve (40), and then such refrigerant is injected into the indoor heat exchanger (30). The refrigerant flowing into the indoor heat exchanger (30) is evaporated by absorbing heat from indoor air. This cools the indoor air in the indoor heat exchanger (30), and the cooled indoor air is sent back to the room by the indoor fan (31). The refrigerant evaporated in the indoor heat exchanger (30) is injected into the compressor (20) through the suction port. The compressor (20) sucks and compresses such refrigerant to discharge it to the entry section (52a) of the underground heat exchanger (50). As described above, in the underground heat exchanger (50), the cooling heat-transfer pipe (52) exchanges heat with soil by using a change in phase of the heat medium.

In the air conditioning system (1), the above-described process is repeated, and therefore a refrigeration cycle (in this example, the cooling operation) is performed, in which the underground heat exchanger (50) serves as the condenser to compress refrigerant in the compressor (20).

As described above, in the present embodiment, the heat medium condensed in the outer pipe (51) is attracted to the outer wall surface of the body section (52c, 52d) of the cooling heat-transfer pipe (52) through the heat medium holding section (60), and therefore the outer wall surface of the body section (52c, 52d) is uniformly moistened by the liquid heat medium. Thus, heat is effectively exchanged between the outer wall surface of the body section (52c, 52d) and the liquid heat medium, thereby effectively condensing refrigerant in the cooling heat-transfer pipe (52). That is, in the present embodiment, the heat exchange capability of the underground heat exchanger is improved, thereby allowing reduction in size of the underground heat exchanger. Such size reduction may lead to reduction in cost of the air conditioning system.

### <<Second Embodiment of the Invention>>

In a second embodiment, an air conditioning system which allows a heating operation in addition to a cooling operation will be described.

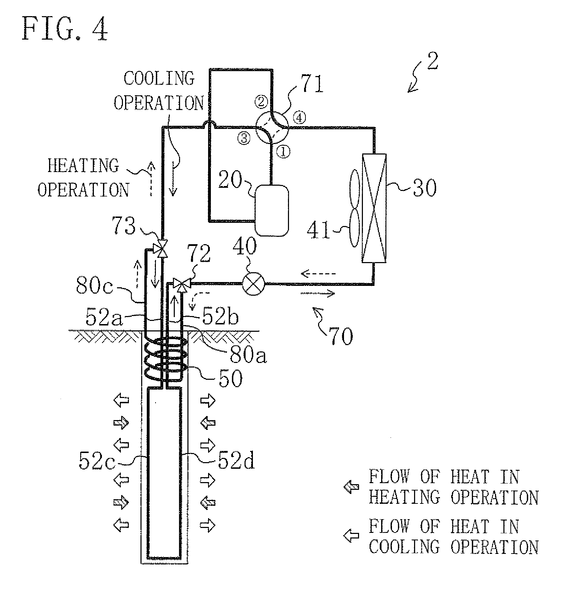

FIG. 4 is a system diagram of an air conditioning system (2) including an underground heat exchanger (50) of the second embodiment. As illustrated in FIG. 4. the air conditioning system (2) includes a refrigerant circuit (70). The refrigerant circuit (70) is configured by adding a four-way reversing valve (71), a first switching valve (72), and a second switching valve (73) to the refrigerant circuit (10) of the first embodiment.

The four-way reversing valve (71) includes first to fourth ports. The four-way reversing valve (71) is switchable between a first state in which the first port communicates with the third port, and the second port communicates with the fourth port (a state indicated by a solid line in FIG. 4); and a second state in which the first port communicates with the fourth port, and the second port communicates with the third port (a state indicated by a dashed line in FIG. 4). In the refrigerant circuit (70), the first port is connected to a discharge port of a compressor (20), and the second port is connected to a suction port of the compressor (20). In addition, the third port is connected to the second switching valve (73), and the fourth port is connected to one end of an indoor heat exchanger (30).

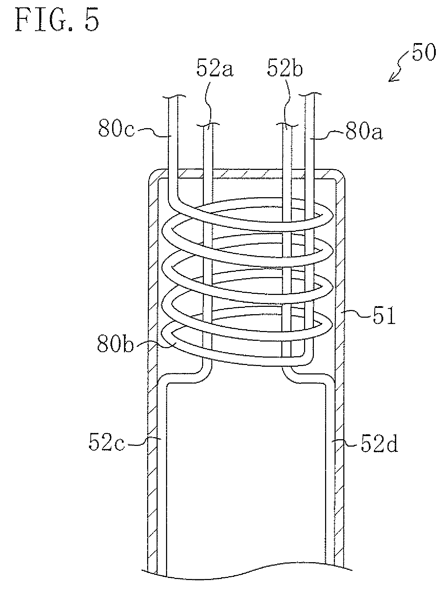

As illustrated in FIG. 5, the underground heat exchanger (50) of the present embodiment is configured by adding a heating heat-transfer pipe (80) to the underground heat exchanger (50) of the first embodiment.

The heating heat-transfer pipe (80) includes an entry section (80a), a body section (80b), and an exit section (80c). In the body section (80b), injected refrigerant is evaporated by absorbing heat from a heat medium in the heating operation. In the present embodiment, the body section (80b) is formed in coiled shape, and is arranged so as to surround an entry section (52a) and an exit section (52b) of a cooling heat-transfer pipe (52) in an upper section inside an outer pipe (51). The entry section (80a) is a pipe for injecting refrigerant into the body section (80b), and the exit section (80c) is a pipe for ejecting refrigerant from the body section (80b). In the present embodiment, both of the entry section (80a) and the exit section (80c) are formed so as to be straight, and are inserted into the outer pipe (51) from above.

The first and second switching valves (72, 73) are valves for switching a flow of refrigerant depending on whether the heating or cooling operation is performed in the air conditioning system (2). The first switching valve (72) connects an expansion valve (40) to either one of the exit section (52b) of the cooling heat-transfer pipe (52) and the entry section (80a) of the heating heat-transfer pipe (80). In addition, the second switching valve (73) connects the third port of the four-way reversing valve (71) to either one of the entry section (52a) of the cooling heat-transfer pipe (52) and the exit section (80c) of the heating heat-transfer pipe (80).

### Operation

Next, an operation in the air conditioning system (2) will be described.

### (Cooling Operation)

First, the cooling operation will be described. In the cooling operation, the four-way reversing valve (71) is switched to the first state. That is, the first port communicates with the third port, and the second port communicates with the fourth port (the state indicated by the solid line in FIG. 4). In addition, the first switching valve (72) is switched so that the expansion valve (40) and the exit section (52b) of the cooling heat-transfer pipe (52) are connected together, and the second switching valve (73) is switched so that the entry section (52a) of the cooling heat-transfer pipe (52) and the third port of the four-way reversing valve (71) are connected together. This allows the refrigerant circuit (70) to be equivalent to the refrigerant circuit (10) of the first embodiment. Thus, the same operation as that of the air conditioning system (1) of the first embodiment is performed in the air conditioning system (2), and a refrigeration cycle (in this example, the cooling operation) is performed, in which the underground heat exchanger (50) serves as a condenser to compress refrigerant in the compressor (20).

### (Heating Operation)

Next, the heating operation of the air conditioning system (2) will be described. In the heating operation, the four-way reversing valve (71) is switched to the second state. That is, the first port communicates with the fourth port, and the second port communicates with the third port (the state indicated by the dashed line in FIG. 4). In addition, the first switching valve (72) is switched so that the expansion valve (40) and the entry section (80a) of the heating heat-transfer pipe (80) are connected together, and the second switching valve (73) is switched so that the exit section (80c) of the heating heat-transfer pipe (80) and the third port of the four-way reversing valve (71) are connected together.

In such a state, when the compressor (20) comes into operation, compressed refrigerant (gaseous refrigerant) is discharged through the discharge port of the compressor (20). Subsequently, the refrigerant discharged from the compressor (20) is sent to the indoor heat exchanger (30) through the four-way reversing valve (71). The refrigerant flowing into the indoor heat exchanger (30) dissipates heat to room air in the indoor heat exchanger (30). The room air is heated in the indoor heat exchanger (30), and the heated room air is sent back to a room by an indoor fan (31). The refrigerant dissipating heat in the indoor heat exchanger (30) is sent to the expansion valve (40). The pressure of the refrigerant flowing into the expansion valve (40) is reduced when passing through the expansion valve (40). Subsequently, such refrigerant flows into the entry section (80a) of the heating heat-transfer pipe (80), and then is injected into the body section (80b).

In such a state, an inner wall surface of the outer pipe (51) initially has a temperature equal to the ground temperature. However, due to large heat transfer resistance, a temperature gradient proportional to an amount of heat dissipated to the heating heat-transfer pipe (80) through the heat medium is generated, thereby decreasing the temperature of soil. Heat transport is controlled so that heat is transferred within a range in which the temperature gradient between the inner wall surface of the outer pipe (51) and the heating heat-transfer pipe (80) is maintained, and in which a temperature distribution under the ground is maintained constant. A part of the heat medium is evaporated into gas by absorbing heat from soil through the inner wall surface of the outer pipe (51). Heat is absorbed from such gaseous heat medium by the body section (80b) of the heating heat-transfer pipe (80), and then the heat medium is condensed to liquid. The liquid heat medium is evaporated by reabsorbing heat from soil through the inner wall surface.

Meanwhile, in the body section (80b), the body section (80b) absorbs heat from the heat medium, and therefore injected refrigerant is evaporated and changed into gas refrigerant. The gas refrigerant is ejected from the exit section (80c) of the heating heat-transfer pipe (80), and then is injected to the suction port of the compressor (20) through the second switching valve (73) and the four-way reversing valve (71). The compressor (20) sucks and compresses such refrigerant, and then discharges the refrigerant to the indoor heat exchanger (30) through the four-way reversing valve (71). In the air conditioning system (2), the above-described process is repeated to perform a refrigeration cycle (in this example, the heating operation) in which the underground heat exchanger (50) serves as an evaporator to compress refrigerant in the compressor (20).

### <<Variation of First and Second Embodiments>>

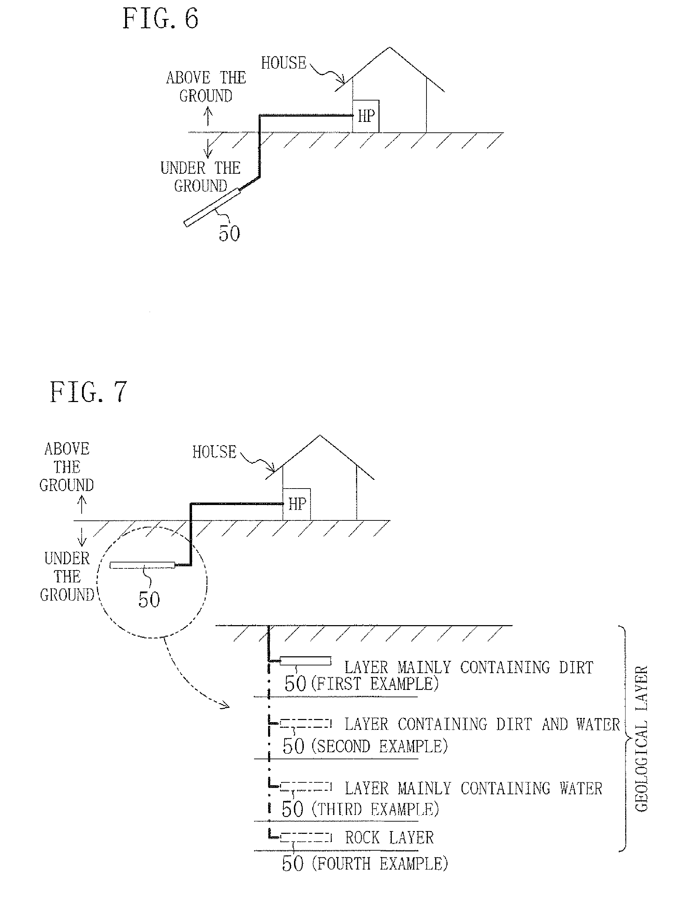

The underground heat exchanger (50) of the first and second embodiments may be installed so as to be inclined in a direction other than the longitudinal direction. FIG. 6 is a view schematically illustrating a state in which an underground heat exchanger (50) is installed so as to be inclined. Even in such installation, heat is exchanged as in each of the embodiments. In FIG. 6, the "HP" represents a body section (section other than a heat exchanger) of an air conditioning system (1) (or an air conditioning system (2)) (hereinafter, the same reference character is used to refer to the same component).

### <<Third Embodiment of the Invention>>

The underground heat exchanger (50) of the first embodiment may be horizontally installed. An underground heat exchanger (50) of the present embodiment is used for a cooling operation. FIG. 7 is a view schematically illustrating a state in which the underground heat exchanger (50) is horizontally installed. A geological layer includes, e.g., a layer mainly containing dirt; a layer containing dirt and water; a layer mainly containing water; and a rock layer in which rocks are successively distributed. The underground heat exchanger (50) may be installed in any of the geological layers, or may be installed so as to cross a plurality of layers. In FIG. 7, a first example illustrates an example in which the underground heat exchanger (50) is installed in the layer mainly containing dirt; a second example illustrates an example in which the underground heat exchanger (50) is installed in the layer containing dirt and water; a third example illustrates an example in which the underground heat exchanger (50) is installed in the layer mainly containing water; and a fourth example illustrates an example in which the underground heat exchanger (50) is installed in the rock layer.

### <<Fourth Embodiment of the Invention>>

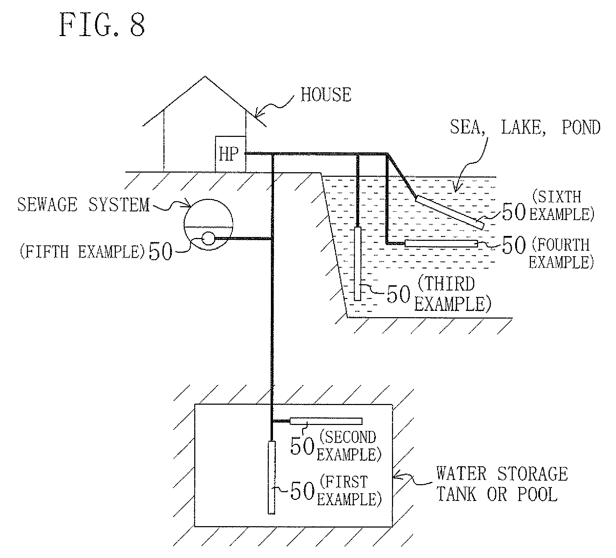

The heat exchanger of the foregoing embodiments and the variation may be installed under the ground, as well as under water. An installation site specifically includes, e.g., the sea, a lake, a pond, a pool, a water storage tank, a river, and a sewage system. FIG. 8 is a view schematically illustrating a state in which a heat exchanger (50) is installed under water. In this figure, five examples (first to fifth examples) are illustrated as examples of installation of the heat exchanger (50) (underwater heat exchanger). The first and second examples are examples in which the heat exchanger (50) is installed in the water storage tank or the pool. In the first example, the heat exchanger (50) is vertically arranged; and, in the second example, the heat exchanger (50) is horizontally arranged. The third and fourth examples are examples in which the heat exchanger (50) is installed in the sea, a lake, or a pond. In the third example, the heat exchanger (50) is vertically arranged; and, in the fourth example, the heat exchanger (50) is horizontally arranged. The fifth example is an example in which the heat exchanger (50) is installed in the sewage system, and is horizontally arranged. That is, when installing the heat exchanger (50) under water, the heat exchanger (50) may be vertically or horizontally arranged. In addition, when installing the heat exchanger (50) under water, the heat exchanger (50) may be installed so as to be inclined (see an sixth example in FIG. 8).

When installing the heat exchanger (50) under water as described above, heat is exchanged by the same mechanism as those of the foregoing embodiments and the variation.

### <<Other Embodiments (Variations)>>

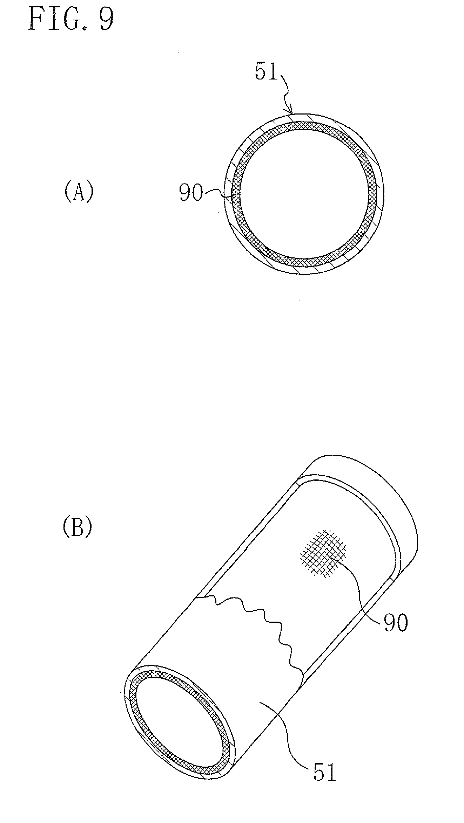

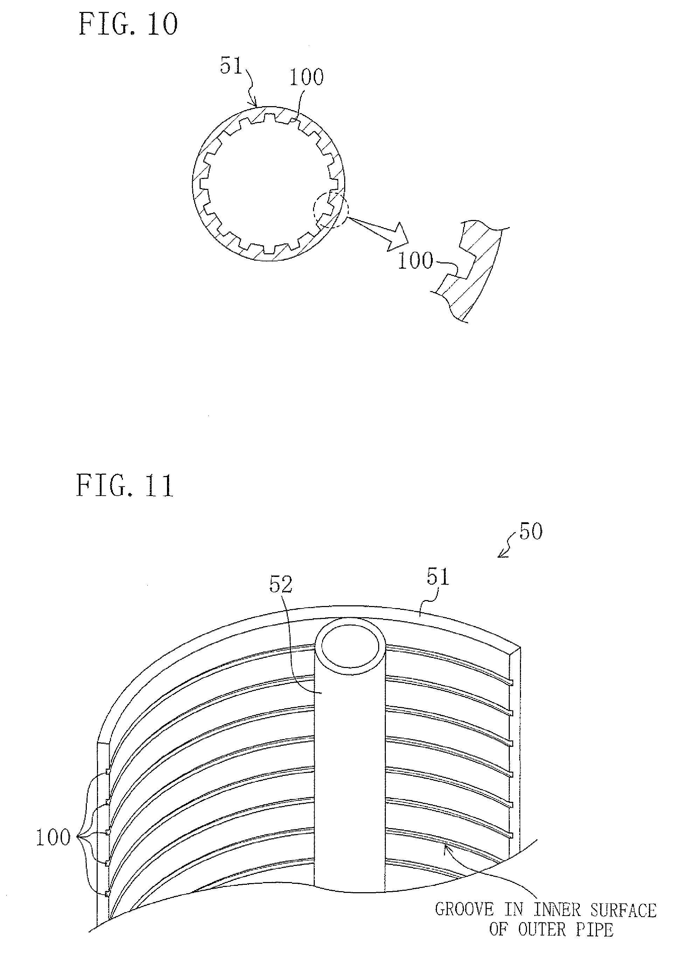

<1> As illustrated in FIGS. 9(A) and 9(B), a wick (90) may be provided on an inner wall surface of an outer pipe (51). A liquid heat medium inside the outer pipe (51) penetrates the wick (90), and is held by the wick (90). The wick (90) allows the held liquid refrigerant to contact the inner wall surface of the outer pipe (51). The wick (90) includes, e.g., an assembly of a porous metal body, porous ceramic, and fibers. The wick (90) is provided on the inner wall surface of the outer pipe (51) as described above, thereby ensuring uniform moistening of the inner wall surface of the outer pipe (51). Consequently, heat exchange capability is improved particularly in a heating operation.
<2> As illustrated in a cross-sectional view of FIG. 10, a plurality of grooves (100) may be provided in an inner wall surface of an outer pipe (51). Specifically, the width, depth, and number of the grooves (100) are set so that a liquid heat medium inside the outer pipe (51) is held. A direction of the grooves (100) is not limited to a direction parallel to an axial direction of the outer pipe (51). For example, the grooves (100) may be formed in a circumferential direction, or may be helically formed. The grooves (100) are provided in the inner wall surface of the outer pipe (51), thereby ensuring uniform moistening of the inner wall surface of the outer pipe (51). Consequently, heat exchange capability is improved particularly in a heating operation. For example, FIG. 11 illustrates an example of the outer pipe (51) in which the grooves (100) are formed in the circumferential direction. For example, when an underground heat exchanger (50) is horizontally installed, the grooves (100) are formed in the circumferential direction as described above, thereby more effectively ensuring the uniform moistening of the inner wall surface of the outer pipe (51).
<3> A heating heat-transfer pipe (80) is not limited to the above as long as the heating heat-transfer pipe (80) serves as a heat exchanger for heating (evaporator).
<4> In the foregoing embodiments, a cooling heat-transfer pipe (52) may be formed in coiled shape. This increases an area where the cooling heat-transfer pipe (52) contacts the heat medium. Thus, in the heat exchanger, heat exchange efficiency can be improved.
<5> In any of the embodiments and the variations, a plurality of heat exchangers (50) may be installed.

### INDUSTRIAL APPLICABILITY

The present invention is useful for the heat exchanger installed under the ground or water, and the air conditioning system using the heat exchanger.

### DESCRIPTION OF REFERENCE CHARACTERS

- 1, 2: Air Conditioning System
- 50: Underground Heat Exchanger (Heat Exchanger)
- 51: Outer Pipe
- 52: Cooling Heat-Transfer Pipe
- 60: Heat Medium Holding Section
- 80: Heating Heat-Transfer Pipe
- 90: Wick
- 100: Groove

## Claims

1. A heat exchanger, comprising:
an outer pipe (51) to be installed under the ground or water;
a cooling heat-transfer pipe (52) which is inserted into the outer pipe (51), and which dissipates heat from refrigerant injected thereto; and
a heat medium sealed in the outer pipe (51),
wherein heat is dissipated by using a change in phase of the heat medium;
the outer pipe (51) and the cooling heat-transfer pipe (52) are arranged so that the liquid heat medium is held between an inner wall surface of the outer pipe (51) and an outer wall surface of the cooling heat-transfer pipe (52).

2. The heat exchanger of claim 1, wherein
the cooling heat-transfer pipe (52) contacts the inner wall surface of the outer pipe (51) for heat exchange.

3. The heat exchanger of claim 1, wherein
the cooling heat-transfer pipe (52) extends from one end of the outer pipe (51) to the other end.

4. The heat exchanger of claim 1, wherein,
in the outer pipe (51), a wick (90) is provided along the inner wall surface of the outer pipe (51).

5. The heat exchanger of claim 1, wherein
grooves (100) for holding the heat medium by surface tension are formed in the inner wall surface of the outer pipe (51).

6. The heat exchanger of claim 1, further comprising:
a heating heat-transfer pipe (80) which is inserted into the outer pipe (51), and which evaporates refrigerant injected thereto.

7. The heat exchanger of claim 1, wherein
the cooling heat-transfer pipe (52) is formed in coiled shape.

8. An air conditioning system, comprising:
the heat exchanger of claim 1 to perform a refrigeration cycle.
